# EUROPEAN PATENT SPECIFICATION

(11) **EP 0 331 740 B1**
(45) Date of publication and mention of the grant of the patent: **10.11.1993**
(21) Application number: 88907364.9
(22) Date of filing: 18.08.1988
(51) Int. Cl.: C22C 38/00

(54) **MAGNETIC CORE MATERIAL FOR HIGH FREQUENCY MADE OF Fe-Co BASE ALLOY**
MAGNETISCHES KERNMATERIAL FÜR HOCHFREQUENZ, HERGESTELLT AUS FE-CO-BASISLEGIERUNG
MATERIAU A NOYAU MAGNETIQUE POUR HAUTE FREQUENCE, COMPOSE D'UN ALLIAGE DE BASE Fe-Co

(30) Priority: 19.08.1987 JP 205940/87
(43) Date of publication of application: 13.09.1989
(73) Proprietor: MITSUBISHI MATERIALS CORPORATION, Chiyoda-ku Tokyo (JP)
(72) Inventor: WAKITA, Saburo, Chiba-Ken 278 (JP); YAMAGUCHI, Kiyoshi, Saitama-ken 346-02 (JP); YANAGISAWA, Norio, Saitama-ken 364 (JP)
(74) Representative: Schütz, Peter, Dipl.-Ing.
(86) International application number: PCT/JP88/00817
(87) International publication number: WO 89/01533

(56) References cited:
- JP-A- 6 311 650
- JP-A-62 227 064
- US-A- 3 891 475

## Description

### [Technical Field of The Invention]

This invention relates to a magnetic core material made of Fe-Co base alloy for high frequencies which has excellent high frequency alternative magnetic properties and is applied to a head core and a plunger yoke of a dot impact printer, and further to a stator and a rotor of a pulse motor.

### [Background Art]

Such a magnetic core material for high frequencies usually should be rapid in a magnetic flux rising induced due to applied current, and a loss due to an excess current needs to be reduced by making a current resistance ratio of the magnetic core large. Therefore, most magnetic core materials are made of Fe base casting alloy which have relatively large current resistance ratio, high magnetic properties, and a composition 2-3.5% by weight of Si and the remainder of Fe and unavoidable impurities (following percent indicate weight percent).

Recently, a word processor, for example, needs to be small-sized and to have high-performance, therefore a material of high saturated magnetic flux density should be utilized for a head core of a dot impact printer in order to form a compact head core. In order to meet the requirements, an alloy of high magnetic flux, e.g. 50% Fe-50% Co casting alloy which is known as permenjure is tried to be used instead of said Fe-Si casting alloy (See "Preliminary Lecture Paper of the 23th autumn Meeting", Japan Electric Material Technique Association). However, such an alloy of high magnetic flux density has less high-frequency magnetic properties than one expects, partly because of a small current resistance; the magnetic core material made of the alloy is deteriorated in magnetic flux rising because of a large eddy current loss. Therefore, the magnetic core material made of the alloy cannot meet the requirements of high-speed operations and clarity when printing which are recently needed in a word processor.

### [Disclosure of Invention]

In view of said conditions, the inventors of the present invention have studied to produce a magnetic core material for high frequencies which has excellent high-frequency alternative magnetic properties. As a result, the inventors have found a magnetic core material for high frequencies which is made of Fe-Co base alloy and whose composition is 45-53% of Co, 0.3-3%, preferably 0.5-1.5% of C, 0.1-2% of one or both of Mn and Si, 0.01-0.2% of at least one of Mg, Ca, and Ce at need, and remainder of Fe and unavoidable impurities, and whose alloy construction is such that 1-20% by volume ratio of graphite is dispersed in a ferrite base. Preferred embodiments of the invention are disclosed in the dependent claims 2 to 4 and 6 to 8. Moreover, the inventors have found that the magnetic core material has more excellent high-frequency alternative magnetic properties than a said conventional magnetic core made of Fe-Co casting alloy for high frequencies, suffers little eddy current loss, and gives prominently rapid magnetic flux rising. Therefore, the magnetic core material readily meets the requirements requested by machines of high-speed, small-size and high-performance.

The present invention is invented based on the above findings. The following descriptions are a cause for including ingredients in Fe-Co base alloy which forms a magnetic core material for high frequencies according to the present invention, a cause for limiting ranges of ratios of the compositions included, and a cause for limiting the ratio of graphite as said above.
(a) Co
   The cause to include Co ingredient is that Co constructs total ratio solid solution in α phase together with Fe ingredient, resulting in prominently high magnetic flux density. Also, the cause to limit the ratio of Co included is that a desired high magnetic flux density cannot be ensured when the ratio of Co included is less than 45% or more than 53%. Consequently, the ratio of Co is determined 45-53% in the present invention.
(b) C
   The cause to include C ingredient is that most of the C ingredient disperse in a ferrite matrix as graphite, resulting in improvements in high-frequency alternative magnetic properties. The cause to limit the ratio of C included is that when the ratio is less than 0.3%, a volume ratio of graphite dispersed in the matrix is less than 1% and the desired improvements in high-frequency alternative magnetic properties cannot be ensured, and that when the ratio of C is more than 3%, a volume ratio of graphite is excessively more than 20% and high-frequency alternative magnetic properties are inversely deteriorated. Consequently, the ratio of C is determined 0.3-3% in the present invention. Particularly, 0.5-1.5% is preferable in the present invention.
(c) Mn and Si
   The cause to include these ingredients is that they show an activity by deoxidation, resulting in improvements in high-frequency alternative magnetic properties. The cause to limit the ratio of the ingredients as said above is that a desired deoxidation effect cannot be ensured when the ratio is less than 1%, while high-frequency alternative magnetic properties tend to be deteriorated when the ratio is more than 2%. Consequently, the ratio is determined 0.1-2% in the present invention.
(d) Mg, Ca, and Ce
   The cause to include these ingredients is that they solid-solve in a ferrite matrix to improve a current resistance of the matrix, resulting in improvement in high-frequency alternative magnetic properties. These ingredients further show degassing effect to reduce ratios of both of oxygen and nitrogen included in the alloy, resulting improving high-frequency alternative magnetic properties. Therefore, if more excellent high-frequency alternative magnetic properties are required, these ingredients are included at need. The cause to limit the ratio of the ingredients as said above is that when the ratio is less than 0.01%, desired effect due to the said degassing activity cannot be obtained, while if the ratio is more than 0.2%, graphitization is difficult and also cementite (Fe₃C) is crystallized, resulting in deterioration in high-frequency alternative magnetic properties. The ratio of these ingredients is determined 0.01-0.2% in the present invention.
(e) A volume Ratio of Graphite
   As described above, graphite dispersion in a ferrite matrix allows prominent improvements in high-frequency alternative magnetic properties. However, desired improvements cannot be ensured in high-frequency alternative magnetic properties when the volume ratio of graphite is less than 1%, and also high-frequency alternative magnetic properties inversely tend to be deteriorated when the volume ratio is more than 20%. Consequently, the volume ratio of graphite is determined 1-20% in the present invention.

Also, although any graphite shape shows effects to improve high-frequency alternative magnetic properties, a comparison of e.g. a spheroidal graphite with a flake graphite indicates that a magnetic core material utilizing a spheroidal graphite shows more excellent high-frequency alternative magnetic properties than that utilizing a flake graphite, under the condition that the ratio of a spheroidal graphite included is the same as that of a flake graphite. This is because a spheroidal graphite more effectively suppresses the occurrence of an eddy current, as the inventors estimate. In order to improve the high-frequency alternative magnetic properties, spheroidal graphites are preferably utilized in a metal construction where a mean diameter of the spheroid is 0.5-50 µm, particularly 2-4 µm is preferable.

Since a magnetic core material for high frequencies shows surprisingly excellent high-frequency alternative magnetic properties, utilization of the magnetic core in a head core material and a plunger yoke of a dot impact printer, or in a stator and a rotor of a pulse motor shows excellent effects and readily speeding-up the dot impact printer and the pulse motor, and enables them to have high-performance. Moreover, since the magnetic core material has such a metal construction as that graphite is dispersed therein, it has better processibility than conventional Fe-Co base alloy which is likewise utilized to these applications.

### [Brief Description of the Drawings]

Fig. 1 is a microphotograph of 500 magnifications of a metal construction (50%Fe-48.9%Co-1.1%C) of a magnetic core material made of Fe-Co base alloy for high frequencies, showing one example of the present invention.

Fig. 2 is a microphotograph of 500 magnifications of a metal construction (50%Fe-50%Co) of a conventional magnetic core material made of Fe-Co base alloy for high frequencies.

### [Best Mode of Carrying Out the Invention]

Next, a magnetic core material for high frequencies according to the present invention is concretely described with reference to embodiments.

By utilizing an usual melting furnace for high frequencies, a molten metal is prepared having a given compositions, and then Mg, Ca, Ce, and Si (Si is as alloy of Fe-Si) of alloy compositions were totally or partly inoculated in the molten metal, provided when a spheroidal graphite was formed, one or more than two ingredients selected among Mg, Ca, and Ce and Fe-Si alloy were inoculated, and when a flake graphite was formed, Fe-Si alloy was inoculated. After inoculation, a molten metal was casted to obtain a spheroidal graphite casting and a flake graphite casting which has dot cores (9 pins) of a dot impact printer as a magnetic core material for high frequencies. The spheroidal graphite casting was sequentially kept at 850°C for 3 hours by utilizing a vacuum heating furnace and was subjected to annealing under the condition of furnace cooling. Also, the flake graphite casting was kept at 750°C for 2 hours by utilizing a vacuum furnace, and was subjected to annealing under the condition of furnace cooling. consequently, each casing has a construction wherein graphite is dispersed in a ferrite matrix. Therefore, by processing the casting to form a finished shape, dot cores 1-17 of the present invention made of Fe-Co base alloy having ingredients ratios and a graphite ratio each of which is respectively shown in Table 1 was formed.

Further, for a comparison, a molten metal having the same composition ratio of comparative dot cores 1-5 as shown in Table 1 was prepared, immediately casted, and processed to form a finished shape. Each ratio of ingredients included in the resulting dot cores 1-5 respectively departs from that according to the invention. Mark "*" shows a ratio departing from that in the present invention.

Next, for each dot core as obtained above, two cores were contacted wherein each end surface of each pin of the cores were exactly put together by means of a non-magnetic medium of 0.3 mm thickness, and a coil was wound around the pin of one dot core. Then, voltage induced by rectangular wave pulse was loaded between the coil terminals under the condition; switching cycle: 50 Hz, voltage between coil terminals: 30 V, switching time: 220 µs, and magnetomotive force (Ni): 150 ampere/turn (current × the number of coil turns), and resulting magnetic flux φ induced in pins of the dot core was measured in order to evaluate high-frequency alternative magnetic properties.

A pin of a dot core has a sectional rectangular shape of 9.6 mm in length × 0.17 cm² in valid sectional area × 2.3 mm in width. A magnetic flux φ is measured by a search coil and calculated by the following formula;

$\text{φ = (1/Ns) ∫edt(wb)}$

where Ns: the number of search coil turns (= 3),
e: voltage induced between search coils, utilizing a wave form analyzer. The results is shown in Table 1. Table 1 also shows a volume ratio of graphite dispersed in a matrix.

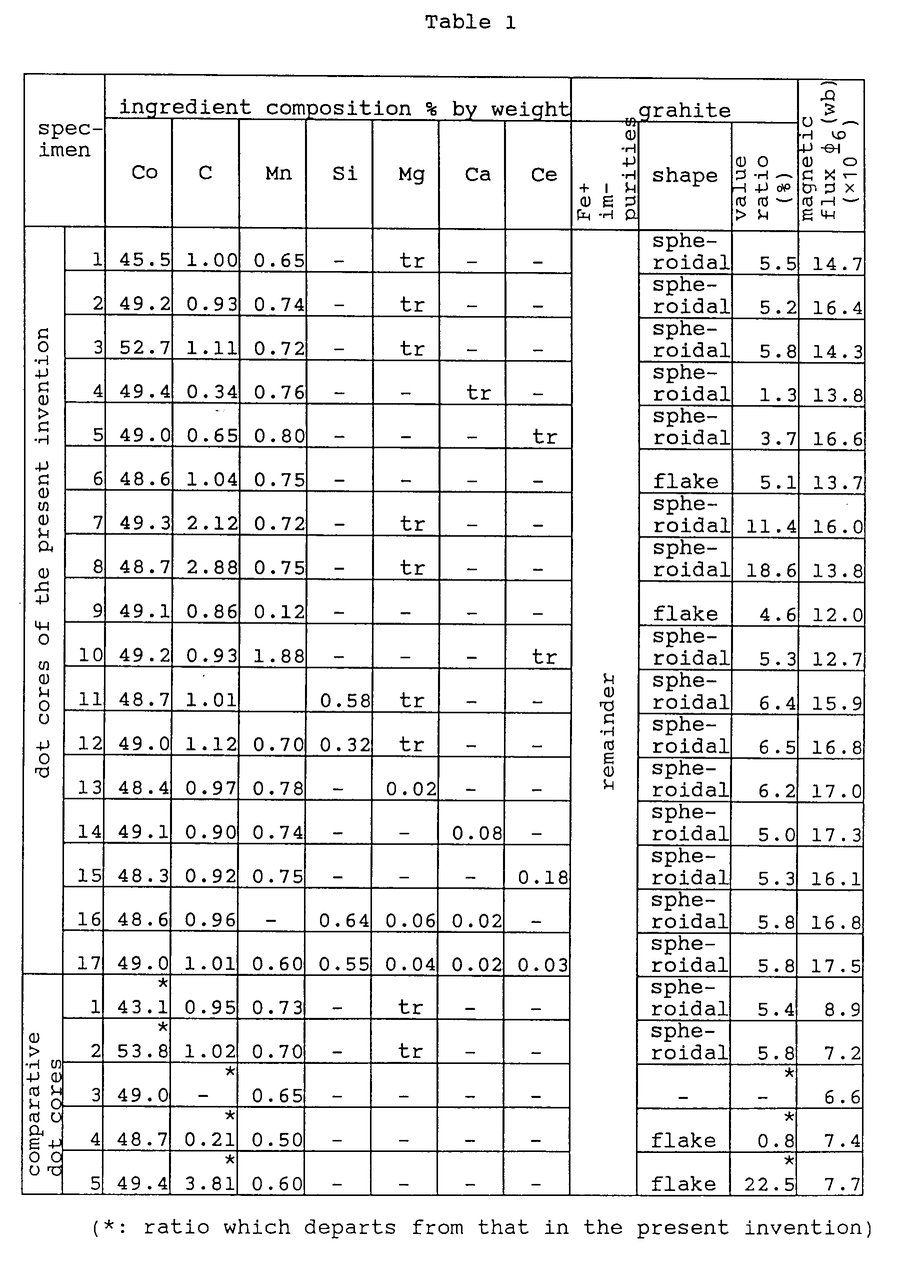

### [Industrial Applicability]

From the results showed in Table 1, it is clear that all dot cores 1-17 of the present invention which has a construction that spheroidal graphite or flake graphite are dispersed in a ferrite matrix shows excellent high-frequency alternative magnetic properties, while comparative dot cores 1-5 cannot show sufficient high-frequency alternative magnetic properties, even if only one ratio of ingredients departs from that according to the invention (for C ingredient, a volume ratio of graphite also departs from that according to the invention).

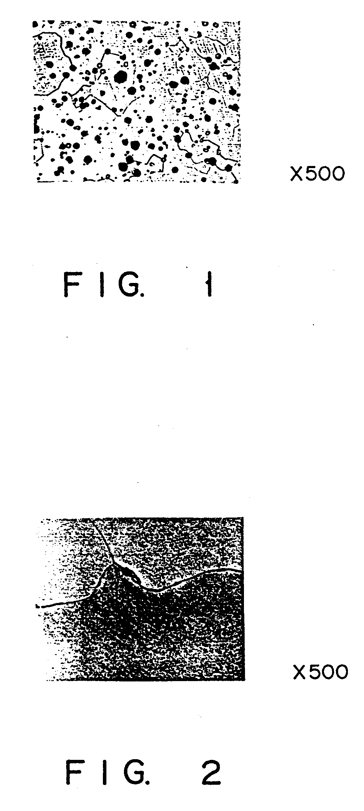

Fig. 1 is a microphotograph showing a metal construction of a magnetic core material made of Fe-Co base alloy for high frequencies with reference to the present invention, and Fig. 2 is a microphotograph showing a metal construction of a conventional magnetic core material made of Fe-Co base alloy for high frequencies. When comporting these microphotographs, it is found that an alloy according to the present invention has a metal construction where graphite is dispersed, while a conventional alloy has that where graphite is not dispersed in absence of carbon ingredient.

## Claims

1. A magnetic core material made of Fe-Co base alloy for high frequencies wherein a Fe-Co base alloy has a composition which includes 45-53% of Co, 0.3-3% of C, 0.1-2% of one or both of Mn and Si, and the remainder of Fe and unavoidable impurities, and which has a construction that 1-20% by a volume ratio of graphite is dispersed in a ferrite matrix.

2. A magnetic core material according to claim 1, wherein Fe-Co base alloy has 0.5-1.5% by weight of C.

3. A magnetic core material according to claim 1, wherein said graphite is a spheroidal graphite whose mean diameter is 0.5-50 µm.

4. A magnetic core material according to claim 1, wherein said graphite is a spheroidal graphite whose mean diameter is 2-4 µm.

5. A magnetic core material made of Fe-Co base alloy for high frequencies wherein a Fe-Co base alloy includes 45-53% of Co, 0.3-3% of C, 0.1-2% of at least one metal selected from Mn and Si, and further 0.01-0.2% by weight of at least one metal selected from a group of Mg, Ca, and Ce, and the remainder of Fe and unavoidable impurities, and the alloy has a construction were 1-20% by a volume ratio of graphite is dispersed in a ferrite matrix.

6. A magnetic core material according to claim 5, wherein a composition has 0.5-1.5% by weight of C.

7. A magnetic core material according to claim 5, wherein said graphite is a spheroidal graphite whose mean diameter is 0.5-50 µm.

8. A magnetic core material according to claim 5, wherein said graphite is a spheroidal graphite whose mean diameter is 2-4 µm.

## Patentansprüche

1. Magnetkernmaterial auf der Basis einer Fe-Co-Legierung für hohe Frequenzen, bei welchem die Legierung auf Fe-Co-Basis eine Zusammensetzung hat, die 45-53% Co, 0,3-3% C, 0,1-2% Mn und/oder Si, Rest Fe und unvermeidbare Verunreinigungen enthält und welche eine Struktur hat, bei der 1-20 Vol.% Graphit in einer Ferrit-Matrix dispergiert sind.

2. Magnetkernmaterial nach Anspruch 1, bei welchem die Legierung auf Fe-Co-Basis 0,5-1,5 Gew.% C enthält.

3. Magnetkernmaterial nach Anspruch 1, bei der der Graphit ein sphäroidischer Graphit mit einem mittleren Durchmesser von 0,5-50 µm ist.

4. Magnetkernmaterial nach Anspruch 1, bei welchem der Graphit ein sphäroidischer Graphit mit einem mittleren Durchmesser von 2-4 µm ist.

5. Magnetkernmaterial auf der Basis einer Fe-Co-Legierung für hohe Frequenzen, bei welchem die Legierung auf Fe-Co-Basis 45-53% Co, 0,3-3,0% C, 0,1-2% mindestens eines der Metalle Mn und Si und weiterhin 0,01-0,2 Gew.% mindestens eines der Metalle Mg, Ca und Ce, Rest Fe und unvermeidbare Verunreinigungen enthält und die Legierung eine Struktur hat, bei der 1-20 Vol.% Graphit in einer Ferrit-Matrix dispergiert sind.

6. Magnetkernmaterial nach Anspruch 5, bei dem die Zusammensetzung 0,5-1,5 Gew.% C enthält.

7. Magnetkernmaterial nach Anspruch 5, bei dem der Graphit ein sphäroidischer Graphit mit einem mittleren Druchmesser von 0,5-50 µm ist.

8. Magnetkernmaterial nach Anspruch 5, bei welchem der Graphit ein sphäroidischer Graphit mit einem mittleren Durchmesser von 2-4 µm ist.

## Revendications

1. Matériau pour noyau magnétique fait en un alliage de base Fe-Co pour hautes fréquences dans lequel un alliage de base Fe-Co a une composition qui comporte entre 45 et 53% de Co, entre 0,3 et 3% de C, entre 0,1 et 2% d'un ou plusieurs éléments parmi Mn et Si, le reste étant du Fe et des impuretés inévitables, et ayant une construction telle qu'une proportion en volume comprise entre 1 et 20% de graphite est dispersée dans une matrice de ferrite.

2. Matériau pour noyau magnétique selon la revendication 1, dans lequel l'alliage de base Fe-Co contient entre 0,5 et 1,5% en poids de C.

3. Matériau pour noyau magnétique selon la revendication 1, dans lequel ledit graphite est un graphite sphéroïdal dont le diamètre moyen est compris entre 0,5 et 50 µm.

4. Matériau pour noyau magnétique selon la revendication 1 dans lequel ledit graphite est un graphite sphéroïdal dont le diamètre moyen est compris entre 2 et 4 µm.

5. Matériau pour noyau magnétique fait en un alliage de base Fe-Co pour hautes fréquences dans lequel un alliage de base Fe-Co comporte entre 45 et 53% de Co, entre 0,3 et 3% de C, entre 0,1 et 2% d'au moins un métal sélectionné parmi Mn et Si, et, de plus, entre 0,01 et 0,2% en poids d'au moins un métal sélectionné parmi un groupe comprenant Mg, Ca et Ce, le reste étant du Fe et des impuretés inévitables, l'alliage ayant une construction dans laquelle une proportion en volume comprise entre 1 et 20% de graphite est dispersée dans une matrice de ferrite.

6. Matériau pour noyau magnétique selon la revendication 5, dans lequel la composition comporte entre 0,5 et 1,5% en poids de C.

7. Matériau pour noyau magnétique selon la revendication 5, dans lequel ledit graphite est un graphite sphéroïdal dont le diamètre moyen est compris entre 0,5 et 50 µm.

8. Matériau pour noyau magnétique selon la revendication 5, dans lequel ledit graphite est un graphite sphéroïdal dont le diamètre moyen est compris entre 2 et 4 µm.
